# EUROPÄISCHE PATENTSCHRIFT

(11) **EP 0 832 813 B1**
(45) Veröffentlichungstag und Bekanntmachung des Hinweises auf die Patenterteilung: **27.11.2002**
(21) Anmeldenummer: 97113735.1
(22) Anmeldetag: 08.08.1997
(51) Int. Cl.: B62K 3/10, B62K 25/30

(54) **Fahrrad, insbesondere Fahrradrahmen**
Bicycle,especially bicycle frame
Bicyclette, notamment cadre de bicyclette

(30) Priorität: 27.09.1996 DE 19639765
(43) Veröffentlichungstag der Anmeldung: 01.04.1998
(73) Patentinhaber: Dr.Ing.h.c. F. Porsche Aktiengesellschaft, 70435 Stuttgart (DE)
(72) Erfinder: Scheffer, Lutz, 75181 Pforzheim-Eutingen (DE)

(56) Entgegenhaltungen:
- WO-A-97/44234
- DE-U- 29 603 546
- FR-A- 2 747 094
- US-A- 5 205 572
- US-A- 5 244 224
- "Kühne Konstruktionen" RADMARKT,Juli 1994 (1994-07), Seite 8 XP002118478
- "Hercules sorgte für Aufsehen mit dem Stratos SL" RADFAHREN,Juni 1994 (1994-06), Seite 18 XP002118480
- "DIamant Räder mit Köpfchen" RADMARKT,Januar 1996 (1996-01), Seite 29 XP002118479

## Beschreibung

Die Erfindung bezieht sich auf ein Fahrrad, insbesondere einen Fahrradrahmen, nach dem Oberbegriff des Anspruchs 1.

Aus der US-PS 52 01 537 ist ein Fahrradrahmen bekannt, der einerseits zwischen einem vorderen Oberrohr, einem Abschnitt eines Schrägrohres und einem Abschnitt eines hinteren Oberrohres ein offenes Dreieck und andererseits zwischen dem Oberrohr, einem Sattelrohr und einem Schrägrohr ein weiteres Dreieck bildet. Mit einem Steuerrohr des Rahmens ist eine vordere Gabel für ein Vorderrad und am Sattelrohr und einem Schrägrohr ist eine hintere Schwinge bzw. Gabel für ein Hinterrad angelenkt.

Die Aufgabe der Erfindung besteht darin, einen Fahrradrahmen zu schaffen, dessen Oberrohr zum Schrägrohr beabstandet ist und sicher am Schrägrohr abgestützt wird, wobei die Abstützung gewichtsmäßig leicht ausgeführt sein soll.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, daß das nicht mit dem Oberrohr verbundene Schrägrohr eine Abstützung mittels eines zwischengesetzten Knotenbleches aufweist. Dieses ist an der als Knick- und Verbindungsbereich gestalteten Übergangsstelle der beiden Rohrabschnitte des Oberrohres angeordnet.

Desweiteren kann aufgrund des durch Durchbrechungen aufweisenden Knotenbleches eine gewichtsmäßig leichte Ausführung des Knotenbleches und somit auch des Rahmens erzielt werden.

Vom weiteren Vorteil ist auch, daß an den Knotenblechen ein Abstützlager für ein Stoßdämpfer vorgesehen ist, so daß eine separate Abstützung des Stoßdämpfers entfallen kann.

Ausführungsbeispiele der Erfindung sind in den Zeichnungen dargestellt und werden im folgenden näher beschrieben.

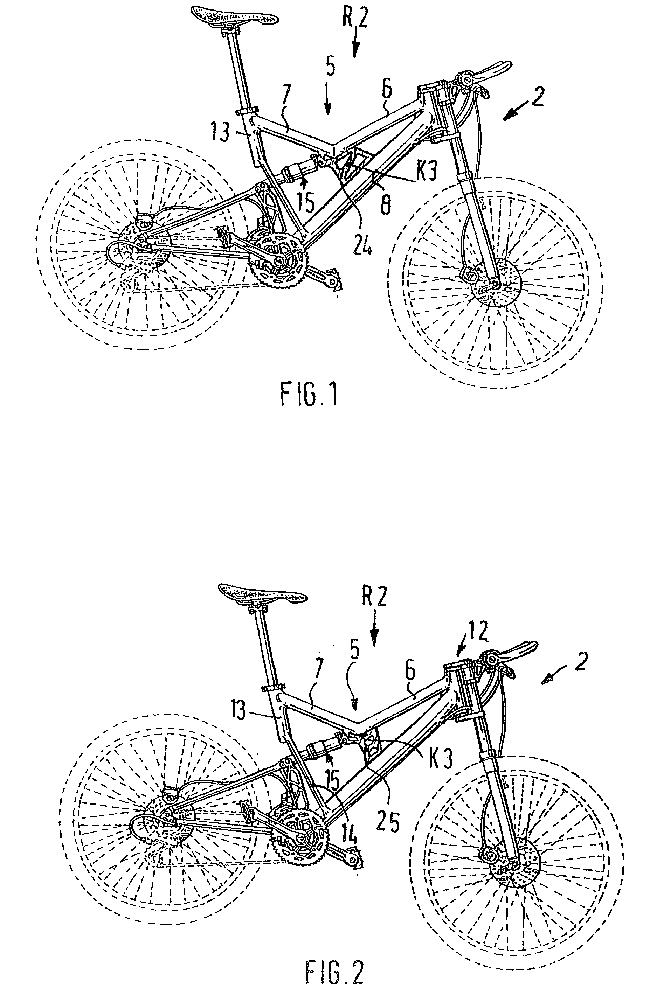

Es zeigen
Fig. 1 und 2 Seitenansichten eines Rahmens für ein Fahrrad mit winkelförmig zueinander angeordneten Oberrahmen mit einem zwischengesetzten Verstärkungsblech zum Schrägrohr.

Ein Rahmen R2 für ein Fahrrad 2, insbesondere mit einer Schwingeneinheit 3 für ein Hinterrad umfaßt im wesentlichen ein Oberrohr 5, bestehend aus einem ersten vorderen Rohrabschnitt 6 und einem zweiten hinteren Sattelrohrabschnitt 7, in Fahrtrichtung des Fahrrads gesehen.

Zwischen den Rohrabschnitten 6 und 7 und einem Schrägrohr 8 bildet sich ein Knotenpunkt K3, der aufgrund der zueinander unter einem Winkel angeordneten Rohrabschnitte 6, 7 in einer Ebene X-X unterhalb der Verbindungspunkte der Rohrabschnitte an der Sattelrohraufnahme 13 und dem Steuerrohr 12 liegt.

Der nach hinten wegragende Sattelrohrabschnitt 7 kann zwecks einer Anbindung an das Schrägrohr 8 mit einer Stützstrebe 14 versehen sein, die mit einem Ende an der Sattelrohraufnahme 13 und mit dem anderen Ende an der Schrägstrebe 8 befestigt ist. Diese Stütze 14 ist gabelförmig ausgeführt, damit die Stoß- bzw. Federdämpfereinheit 15 hindurchführbar ist.

In der Ausführung des Rahmens R2 gemäß den Figuren 1 und 2 sind die unter einem Winkel zueinander angeordneten Rohrabschnitte 6, 7 im Knotenpunkt K3 mittels Verstärkungsbleche 24 oder 25 zum Schrägrohr 8 hin abgestützt. Diese Verstärkungsbleche 24 (Fig. 1) oder 25 (Fig. 2) sind vorzugsweise mit Durchbrechungen versehen. Die Abstützung des Stoßdämpfers 15 kann zwischen zwei parallel angeordneten Verstärkungsblechen 24 oder 25 erfolgen.

## Patentansprüche

1. Fahrrad, insbesondere Fahrradrahmen, mit einem eine Gabel für ein Vorderrad haltenden Steuerrohr (12), einem Sattelrohr (13), einem am Steuerrohr befestigten Schrägrohr, (8) einem einen am Steuerrohr befestigten vorderen Rohrabschnitt (6) und einen am Sattelrohr befestigten hinteren Rohrabschnitt (7) aufweisenden Oberrohr (5), einer am Fahrradrahmen gehaltenen Tretlagereinheit und mit einer Schwingeneinheit für ein Hinterrad, wobei zwischen Oberrohr und Schrägrohr eine Stützanordnung (24,25) vorgesehen und mit diesen Rohren verbunden ist und die Rohrabschnitte des Oberrohrs unter einem Winkel zueinander verlaufen und zwischen sich eine nach unten gerichtete Übergangsstelle bilden, **dadurch gekennzeichnet, daß** die Stützanordnung (24,25) als mindestens ein Knotenblech (24; 25) ausgebildet ist, welches mit dem Oberrohr (5) an der als Knick- und Verbindungsbereich gestalteten Übergangsstelle der beiden Rohrabschnitte (6 und 7) verbunden ist.

2. Fahrrad nach Anspruch 1, **dadurch gekennzeichnet, daß** das mindestens eine Knotenblech (24; 25) Durchbrechungen aufweist.

3. Fahrrad nach den Ansprüchen 1 oder 2, **dadurch gekennzeichnet, daß** zwischen zwei Knotenblechen (24; 25) ein Abstützlager für einen Stoßdämpfer (15) vorgesehen ist.

## Claims

1. A bicycle, in particular a bicycle frame, with a steering tube (12) holding a fork for a front wheel, a saddle tube (13), an inclined tube (8) fastened to the steering tube, an upper tube (5) comprising a front tube portion (6) fastened to the steering tube and a rear tube portion (7) fastened to the saddle tube, a bottom bracket bearing unit held on the bicycle frame and with a swinging-fork unit for a rear wheel, wherein a support arrangement (24, 25) is provided between the upper tube and the inclined tube and is joined to the said tubes and the tube portions of the upper tube extend at an angle to each other and form a downwardly directed transition point between themselves, **characterized in that** the support arrangement (24, 25) is constructed in the form of at least one gusset plate (24; 25) which is connected to the upper tube (5) at the transition point of the two tube portions (6 and 7) which is constructed in the form of a buckling and joining region.

2. A bicycle according to Claim 1, **characterized in that** the at least one gusset plate (24; 25) has through-openings.

3. A bicycle according to Claims 1 and 2, **characterized in that** a support bearing for a shock absorber (15) is provided between two gusset plates (24; 25).

## Revendications

1. Bicyclette, en particulier cadre de bicyclette, comprenant un tube de direction (12) supportant une fourche pour une roue avant, un tube de selle (13), un tube oblique (8) fixé contre le tube de direction, un tube supérieur (5) formé par une partie de tube avant (6) fixée contre le tube de direction et par une partie de tube arrière (7) fixée contre le tube de selle, une unité de palier du pédalier, maintenue contre le cadre de bicyclette, et une unité à bras oscillant pour une roue arrière, dans laquelle un dispositif de support (24, 25) est prévu entre le tube supérieur et le tube oblique et est assemblé avec ces tubes, et les parties du tube supérieur sont disposées l'une par rapport à l'autre en formant un angle et forment entre elles une zone de transition orientée vers le bas, **caractérisée en ce que** le dispositif de support (24, 25) est conçu sous forme d'au moins un gousset de jonction (24 ; 25), qui est assemblé avec le tube supérieur (5) au niveau de la zone de transition entre les deux parties de tube (6 et 7), conçue sous forme de zone coudée pour assemblage.

2. Bicyclette selon la revendication 1, **caractérisée en ce qu'**au moins un gousset de jonction (24 ; 25) comporte des ajours.

3. Bicyclette selon la revendication 1 ou 2, **caractérisée en ce qu'**un palier d'appui pour un amortisseur de chocs (15) est prévu entre les deux goussets de jonction (24 ; 25).
